# EUROPÄISCHE PATENTSCHRIFT

(11) **EP 2 377 723 B1**
(45) Veröffentlichungstag und Bekanntmachung des Hinweises auf die Patenterteilung: **26.10.2016**
(21) Anmeldenummer: 10015865.8
(22) Anmeldetag: 21.12.2010
(51) Int. Cl.: B60Q 1/30, B60R 16/00, B60Q 11/00, B60D 1/62

(54) **Anhängererkennungseinrichtung**
Trailer detection device
Dispositif de reconnaissance de remorque

(30) Priorität: 16.04.2010 DE 202010005779 U
(43) Veröffentlichungstag der Anmeldung: 19.10.2011
(73) Patentinhaber: ConWys AG, 6023 Rothenburg (CH)
(72) Erfinder: Wystron, Alexander, 6003 Luzern (CH)
(74) Vertreter: Stenger Watzke Ring

(56) Entgegenhaltungen:
- DE-A1- 10 236 302
- DE-A1-102004 045 435
- DE-A1-102008 008 217
- DE-A1-102008 048 701
- DE-U1-202007 007 775

## Beschreibung

Die vorliegende Erfindung betrifft eine Anhängererkennungseinrichtung für ein Zugfahrzeug eines aus einem Zugfahrzeug und einem Anhänger gebildeten Fahrzeugzugs, wobei der Anhänger eine Anhängerbeleuchtungsanlage mit wenigstens einer Leuchte aufweist. Die Erfindung betrifft ferner ein Anhängeranschlussgerät sowie ein Zugfahrzeug. Die Erfindung betrifft weiterhin ein Verfahren zur Anhängererkennung bei einem aus einem Zugfahrzeug und einem Anhänger gebildeten Fahrzeugzug.

Anhängererkennungseinrichtungen sind dem Grunde nach bekannt. Sie dienen dazu, im Zugfahrzeug des Fahrzeugzugs insbesondere während des bestimmungsgemäßen Betriebs des Fahrzeugs vorzugsweise kontinuierlich feststellen zu können, ob eine bestimmungsgemäße Verbindung des Anhängers an dem Zugfahrzeug vorliegt.

Mit der Anhängererkennungseinrichtung kann erkannt werden, ob der Anhänger an das Zugfahrzeug angeschlossen und funktionsbereit ist. Im Allgemeinen weisen sowohl das Zugfahrzeug als auch der Anhänger eine elektrische Anlage - auch Bordnetz genannt - auf, die der Beleuchtung des Zugfahrzeugs und des Anhängers, das heißt, des daraus gebildeten Fahrzeugzugs dienen. So verfügen das Zugfahrzeug über eine Zugfahrzeugbeleuchtungsanlage und der Anhänger über eine Anhängerbeleuchtungsanlage. Sowohl die Zugfahrzeugbeleuchtungsanlage als auch die Anhängerbeleuchtungsanlage weisen Fahrzeugleuchten auf, mit denen das Fahrzeug bei schlechter Sicht und/oder in der Dunkelheit beleuchtet wird, so dass Dritte das Fahrzeug sicher erkennen können. Darüber hinaus können als Leuchten Bremsleuchten, Nebelschlussleuchten, Schlussleuchten, Blinkerleuchten und/oder dergleichen vorgesehen sein. Insbesondere ist es vorgesehen, dass für den sicheren Betrieb des Fahrzeugzugs Leuchten des Zugfahrzeugs und des Anhängers hinsichtlich ihrer Funktion zumindest teilweise miteinander gekoppelt sind, so beispielsweise die Bremsleuchten, die Schlussleuchten, die Nebelschlussleuchte sowie die Blinkerleuchten. Hierzu ist zwischen der elektrischen Anlage des Zugfahrzeugs und der elektrischen Anlage des Anhängers über eine Anhängerkupplung eine elektrische Verbindung hergestellt, die einen entsprechenden Betrieb erlaubt. Die elektrischen Anlagen des Zugfahrzeugs und des Anhängers, insbesondere die Zugfahrzeugbeleuchtungsanlage und die Anhängerbeleuchtungsanlage, sind somit elektrisch gekoppelt. Die elektrische Kopplung ist in der Regel durch einen in eine Zugfahrzeugsteckdose eingesteckten Anhängerstecker hergestellt.

Als Anhänger im Sinne der Erfindung sollen nicht nur gezogene Fahrzeuge mit einem eigenen Fahrwerk oder dergleichen verstanden werden, sondern auch Aufbauten wie beispielsweise Heckaufbauten, die auch mit einer Anhängerkupplung verbunden und von dieser getragen werden können, beispielsweise Fahrradheckträger, Gepäckheckträger oder dergleichen.

Zur Erkennung, dass eine bestimmungsgemäße Kupplung zwischen dem Zugfahrzeug und dem Anhänger vorliegt, ist es aus dem Stand der Technik bekannt, in einer Anhängersteckdose der Anhängerkupplung des Zugfahrzeugs einen Mikroschalter vorzusehen, der durch Einstecken eines Anhängersteckers des Anhängers betätigt wird. Das Schalten des Mikroschalters wird detektiert und es wird ein entsprechendes Signal einem Fahrer des Zugfahrzeugs signalisiert, beispielsweise indem es mittels einer separaten Leuchte in einem Cockpit des Zugfahrzeugs zur Anzeige gebracht wird. Die Verwendung eines Mikroschalters findet zwar Anwendung im Bereich der Anhängererkennung, jedoch ist das Vorsehen des Mikroschalters in der Anhängersteckdose mechanisch aufwändig und kostenintensiv und der Mikroschalter neigt zur Alterung beziehungsweise zum Verschleiß, so dass ein zuverlässiger Betrieb über die prognostizierte Betriebsdauer des Zugfahrzeugs eingeschränkt ist.

Eine weitere Möglichkeit der Anhängererkennung kennt der Stand der Technik anhand des Prinzips der "kalten Masse". Dieses Prinzip nutzt die Eigenschaft einer eine Glühlampe als Leuchtmittel aufweisenden Leuchte. Üblicherweise weist die Leuchte wenigstens zwei Anschlüsse auf, wobei jeder Anschluss mit einem Ende eines Glühfadens der Glühlampe verbunden ist. Die Leuchte ist mit einem ersten Anschluss an eine Masse des Bordnetzes angeschlossen.

Die Masse kann eine Zugfahrzeugmasse oder auch eine Anhängermasse sein, die mit der Zugfahrzeugmasse elektrisch gekoppelt ist. Üblicherweise ist die Masse, insbesondere die Zugfahrzeugmasse Bestandteil des Bordnetzes, welches auch die elektrische Anlage des Zugfahrzeugs und/oder des Anhängers umfasst. Das Bordnetz dient zum Betrieb, insbesondere auch zur Energieversorgung der an ihm angeschlossenen elektrischen Komponenten, die die Leuchten umfassen. Die Masse stellt dabei in der Regel ein elektrisches Bezugspotential dar, an welches die Komponenten üblicherweise mit einem Anschluss angeschlossen sind. Das Bordnetz umfasst somit auch eine elektrische Energieversorgung, die bei Fahrzeugen üblicherweise aus einem Generator und/oder einem Akkumulator gebildet ist. Das Bordnetz dient somit dazu, elektrische Energie zwischen seinen an ihm angeschlossenen Komponenten vorzugsweise gesteuert zu verteilen. In der Regel ist die Leuchte der Anhängerbeleuchtungsanlage mit einem zweiten Anschluss an eine Leitung zur gesteuerten Versorgung der Leuchte mit elektrischer Energie aus dem Bordnetz des Zugfahrzeugs angeschlossen. Dies erfolgt üblicherweise über die Anhängerkupplung. Somit ist es möglich, aus dem Zugfahrzeug heraus die Leuchte des Anhängers in vorgebbarer Weise zu betreiben.

Bei diesem zweiten Prinzip des Stands der Technik wird die Tatsache genutzt, dass der Glühfaden aufgrund seiner physikalischen Eigenschaften nahezu einen elektrischen Kurzschluss darstellt, sofern die Leuchte nicht aktiviert ist und der Glühfaden deren Glühlampe eine entsprechend niedrige Temperatur aufweist, bei der keine Leuchtwirkung auftritt. Mittels geeigneter Ansteuerung auf der Leitung zur Leuchte kann über den Kurzschluss aufgrund des Glühfadens die Anhängermasse, die mit der Zugfahrzeugmasse elektrisch gekoppelt ist, detektiert werden. Ist der Anhänger nicht ordnungsgemäß an das Zugfahrzeug angekuppelt, wird aufgrund einer Unterbrechung in der Leitung zur Leuchte der Anhängerbeleuchtungsanlage anstelle eines Kurzschlusses zur Masse eine Unterbrechung detektiert und ein entsprechendes Signal an den Fahrer des Zugfahrzeugs beziehungsweise im Cockpit ausgegeben. Eine Anhängererkennungsschaltung nach dem Prinzip der "kalten Masse" offenbaren die EP 2 000 358 A1 und die DE 41 34 993 A1. Das vorgenannte Prinzip der "kalten Masse" vermeidet zwar den bereits als nachteilig erkannten Mikroschalter, jedoch ist es hinsichtlich seiner Funktion an die spezielle Eigenschaft des Glühfadens im ausgeschalteten Zustand der Glühlampe angepasst. Bei vielen Fahrzeugen ist es mittlerweile üblich, anstelle einer Glühlampe als Leuchtmittel in der Leuchte eine Leuchtdiodenanordnung als Leuchtmittel einzusetzen. Aufgrund der stark abweichenden physikalischen Eigenschaften von Leuchtdioden gegenüber Glühlampen kann das vorbeschriebene Verfahren der "kalten Masse" bei Leuchtdiodenanordnungen nicht zum Einsatz kommen. Eine Leuchtdiodenanordnung als Leuchtmittel der Leuchte der Anhängerbeleuchtungsanlage führt dazu, dass eine elektrische Verbindung zwischen der Leitung zur Leuchte und der Anhängermasse in Form eines Kurzschlusses nicht mehr vorliegt. Dadurch kann das Anhängererkennungsprinzip der "kalten Masse" nicht eingesetzt werden. Es würde auch bei bestimmungsgemäßer Kupplung eine Störung gemeldet, obwohl keine Störung vorliegt.

Darüber hinaus kann bei der DE 41 34 993 A1 mittels einer Betriebsstrommessung aufgrund eines Spannungsabfalls über einer Treiberschaltung für die anhängerseitige Leuchte im aktiven Betriebszustand der Leuchte eine Anhängererkennung realisiert werden. Letzteres erfordert jedoch, dass die anhängerseitige Leuchte auch tatsächlich im Fahrzeugzugbetrieb aktiviert ist. Ist keine Leuchte aktiv, kann auch kein Anhänger erkannt werden, und zwar unabhängig davon, ob ein Anhänger an das Zugfahrzeug angekuppelt ist.

Dieses Funktionsprinzip der Betriebsstrommessung wird im Übrigen bei der DE 32 44 250 A1 zur Leuchtenüberwachung eingesetzt, wobei die Treiberschaltung durch einen Serienwiderstand ersetzt ist. Auch die EP 2 000 358 A1 nutzt dieses Funktionsprinzip der Betriebsstrommessung in gleicher Weise wie die DE 32 44 250 A1, hier jedoch für die Feststellung, welcher Art das Leuchtmittel der Leuchte ist, um je nach ermitteltem Leuchtmittel gegebenenfalls der Leuchte eine zusätzliche Last parallelzuschalten. Der Vollständigkeit halber wird angeführt, dass das Funktionsprinzip der Betriebsstrommessung für eine zuverlässige Funktion eine konstante Versorgungsspannung benötigt. Bei Zugfahrzeugen ist dies häufig nicht gewährleistet. Deshalb schlägt die DE 10 2004 003 844 A1 vor, die aktuelle Versorgungsspannung für die Leuchte zu messen, die Leuchte im Pulsbetrieb zu betreiben und die Pulsdauer des Pulsbetriebs entsprechend der aktuell gemessenen Versorgungsspannung anzupassen. Eine zuverlässige Anhängererkennung lässt sich hierdurch aber nicht erreichen.

DE 20 2007 007 775 U1 offenbart ein Anhängeranschlussgerät für ein Fahrzeugzug mit einem Zugfahrzeug und einem Anhänger, mit einem für eine Ansteuerung einer Leuchtdiode des Anhängers geeigneten Halbleiterschalter, der mittels einer Steuereinrichtung schaltbar ist, wobei die Steuereinrichtung mit einem steuereinrichtungenverbindenden Datennetz des Zugfahrzeugs in kommunikationstechnischer Verbindung steht. Die Leuchtdiode wird überwacht. Ein Meldesignal wird ausgegeben, wenn die Steckverbindung zwischen Zugfahrzeug und Anhänger unterbrochen ist.

Es ist nunmehr die **Aufgabe** der Erfindung, eine Anhängererkennungseinrichtung zu schaffen, die es ermöglicht, eine zuverlässige Anhängererkennung unabhängig vom in der Leuchte eingesetzten Leuchtmittel zu ermöglichen, ohne dass ein Einsatz von Mikroschaltern erforderlich wäre und ohne den Strom in der Masse des Bordnetzes zu messen.

Als Lösung wird mit der Erfindung vorgeschlagen eine Anhängererkennungseinrichtung mit den Merkmalen nach Anspruch 1.

Die Erfindung ermöglicht es somit, unabhängig von der Art des Leuchtmittels der Leuchte, beispielsweise Glühlampe, Leuchtdiodenanordnung oder dergleichen, zuverlässig festzustellen, ob eine bestimmungsgemäße Kupplung zwischen dem Zugfahrzeug und dem Anhänger vorliegt. Dabei macht es sich die Erfindung zu Nutze, mittels der Konstantstromquelle einen konstanten Strom aus dem Bordnetz bereitzustellen und in die Leuchte einzuspeisen. Ein Grundprinzip der Erfindung ist demnach, dass eine Reihenschaltung aus der Konstantstromquelle und der Leuchte gebildet und vorzugsweise die sich dadurch ergebende elektrische Spannung an der Leuchte und/oder an der Konstantstromquelle mittels der Spannungsmessschaltung gemessen wird. Die gemessene elektrische Spannung ist bei geeigneter Wahl des Konstantstromes durch charakteristische Eigenschaften der Leuchte beziehungsweise des Leuchtmittels bestimmt. Natürlich kann auch die elektrische Spannung am Verbindungspunkt der Konstantstromquelle mit der Leuchte gegenüber irgendeinem Bezugspotential des Bordnetzes ermittelt werden. Durch Auswerten der ermittelten elektrischen Spannung kann festgestellt werden, ob eine elektrische Verbindung zur Leuchte besteht und, insbesondere wenn es sich um eine Leuchte des Anhängers handelt, ob ein Anhänger bestimmungsgemäß an das Zugfahrzeug angeschlossen ist.

Anders als bei der DE 41 34 993 A1 wird folglich gemäß der Erfindung weder das Prinzip der "kalten Masse" noch eine Betriebsstrommessung der Leuchte anhand eines Spannungsabfalls über einer Treiberschaltung oder eines Serienwiderstands für die anhängerseitige Leuchte genutzt. Deshalb benötig die Erfindung - anders als die EP 2 000 358 A1, die DE 32 44 250 A1 und die DE 41 34 993 A1 - auch keine im Wesentlichen konstante Versorgungsspannung. Aufgrund des erfindungswesentlichen Konstantstromprinzips haben bei der Erfindung Spannungsschwankungen nämlich im Wesentlichen keine Auswirkung auf die Funktion der Anhängererkennung, und zwar insbesondere dann nicht, wenn die Spannung der Leuchte erfasst wird. Auf einen versorgungsspannungsabhängigen Pulsbetrieb wie bei der DE10 2004 003 844 A1 kommt es bei der Erfindung nicht an. Die Erfindung erfordert dem Grunde nach keine Versorgungsspannungsmessung, und zwar weder an der elektrischen Energieversorgung noch an der aktivierten Leuchte.

Das Bezugspotential ist ein elektrisches Potential, welches als Bezugssystem im elektrisch physikalischen Sinne einen Bezugspunkt bereitstellt, gegenüber dem elektrische Spannungen anderer elektrischer Potentiale gemessen werden können. Im Bordnetz eines Fahrzeugs kann das Bezugspotential durch ein beliebiges elektrisches Potential gebildet sein. In der Regel ist das Bezugspotential bei einem Fahrzeug eine Fahrzeugmasse, die zugleich als Minus-Anschluss oder als Plus-Anschluss dienen kann. Vorzugsweise wird bei einem Fahrzeug das Bezugspotential durch einen elektrisch leitfähigen Körper gebildet, beispielsweise die Karosserie des Fahrzeugs. In der Regel weist die elektrische Energieversorgung des Zugfahrzeugs oder des Bordnetzes wenigstens einen Anschluss auf, der an die Masse angeschlossen ist. Die Masse ist zumeist an einem Minus-Pol der elektrischen Energieversorgung angeschlossen. Ein zweiter Anschluss der elektrischen Energieversorgung bildet häufig ein zweites Bezugspotential. Der zweite Anschluss ist üblicherweise durch den Plus-Pol der elektrischen Energieversorgung gebildet, wenn der Minus-Pol an die Masse angeschlossen ist. Die Wahl der Bezugspotentiale kann auch variieren.

Die Erfindung ist natürlich nicht auf den Einsatz bei Leuchten beschränkt. Sie lässt sich jedoch bei Leuchten besonders einfach und zweckmäßig realisieren. Dem Grunde nach kann anstelle einer Leuchte auch eine beliebige andere, an die Leitung angeschlossene elektrische Komponente beziehungsweise Verbraucher des Anhängers für die Anhängererkennung genutzt werden.

Die Erfindung eignet sich insbesondere zum Einsatz bei Fahrzeugzügen. Ein Fahrzeugzug besteht in der Regel aus wenigstens zwei Fahrzeugen, beispielsweise einem Zugfahrzeug und wenigstens einem Anhänger, welcher an das Zugfahrzeug zur Bildung des Fahrzeugzugs gekuppelt ist. Der Fahrzeugzug kann auch mehrere Zugfahrzeuge oder ein oder mehrere Zugfahrzeuge mit mehreren Anhängern umfassen. Als Zugfahrzeuge kommen überwiegend Kraftfahrzeuge zum Einsatz, die einen eigenen Antrieb zum Antreiben des Fahrzeugzugs aufweisen. Aus Sicherheitsgründen sowie aufgrund gesetzlicher Vorgaben sind der Fahrzeugzug, insbesondere das Zugfahrzeug sowie auch der Anhänger, mit einer Beleuchtung - in der Regel in Form einer Beleuchtungsanlage - zu versehen. Anhänger im Sinne der Erfindung sind nicht nur Fahrzeuge mit einem eigenen Fahrwerk, Auflieger oder dergleichen, sondern auch Aufbauten, die beispielsweise auch mit einer Anhängerkupplung eines Zugfahrzeugs verbunden und von dieser getragen sein können, beispielsweise Fahrradheckträger, Gepäckheckträger oder dergleichen.

Der Konstantstrom ist dabei vorzugsweise derart bemessen, dass eine Leuchtwirkung des Leuchtmittels, die optisch wahrnehmbar wäre, weitgehend unterdrückt ist. Die Konstantstromquelle ist vorzugsweise eine Konstantstromquelle elektronischer Art, die aus einem oder mehreren elektronischen Bauteilen gebildet ist. Im Allgemeinen umfassen Konstantstromquellen einen Transistor, beispielsweise einen bipolaren Transistor, einen Feldeffekttransistor oder dergleichen sowie einen oder mehrere elektrische Widerstände und je nach Schaltung eine oder mehrere Dioden beziehungsweise eine Zehnerdiode. Darüber hinaus kann eine Konstantstromquelle auch mittels eines Operationsverstärkers gebildet sein. Die Konstantstromquelle bezieht ihre elektrische Energie, aus der der Konstantstrom gewonnen und bereitgestellt wird, aus dem Bordnetz. Die Konstantstromquelle erzeugt demnach keine elektrische Energie selbst.

Die Konstantstromquelle stellt über einen vorgebbaren Spannungsbereich einen im Wesentlichen konstanten elektrischen Strom bereit, der in der Regel ein Gleichstrom ist. Dies erklärt im Übrigen auch, weshalb die Versorgungsspannung von untergeordneter Bedeutung für die Erfindung ist. Der Spannungsbereich ist üblicherweise durch Bezugspotentiale begrenzt, an denen die Konstantstromquelle angeschlossen ist. Der Spannungsbereich kann durch den Anschluss an das Bordnetz begrenzt sein, welcher Anschluss beispielsweise durch das zweite Bezugspotential beziehungsweise durch den Plus-Pol der elektrischen Energieversorgung gebildet sein kann. Das Grundprinzip der Erfindung ist aber nicht auf Gleichstrom beschränkt, sondern kann auch bei einem stationären Wechselstrom eingesetzt werden. Ein stationärer Wechselstrom ist ein Wechselstrom mit im Wesentlichen zeitlich harmonischem Verlauf und konstanter Amplitude, beispielsweise sinusförmig, rechteckförmig, impulsförmig, Kombinationen hiervon und/oder dergleichen. Bei der Auswertung der ermittelten elektrischen Spannung können Effektivwerte, Spitzenwerte, Mittelwerte und/oder dergleichen berücksichtigt werden.

Durch den Konstantstrom wird ein Stromfluss durch die Leuchte eingeprägt. Das Einprägen eines Stromflusses durch die Leuchte führt im Wesentlichen zu keinem Spannungsabfall, wenn als Leuchtmittel der Leuchte eine Glühlampe zum Einsatz kommt. Wird dagegen eine Leuchtdiodenanordnung als Leuchtmittel der Leuchte verwendet, so liegt an der Leitung zur Leuchte eine durch die physikalischen Eigenschaften der Leuchtdiodenanordnung vorgegebene, das heißt charakteristische, elektrische Spannung gegenüber der Zugfahrzeugmasse an.

Mittels der Spannungsmessschaltung kann diese Spannung der Leitung zur Leuchte gegenüber einem Bezugspotential des Bordnetzes, vorzugsweise der Masse, insbesondere der Zugfahrzeugmasse ermittelt werden. Die Spannungsmessschaltung kann zwei Anschlüsse aufweisen, und zwar einen ersten Anschluss zum Anschließen an die Leitung zur gesteuerten Versorgung der Leuchte und an die Konstantstromquelle sowie einen zweiten Anschluss zum Anschließen an ein elektrisches Bezugspotential des Bordnetzes, beispielsweise die Masse. Vorzugsweise kann mittels der Spannungsmessschaltung die elektrische Spannung an den Anschlüssen der Leuchte erfasst werden. Die mittels der Erfindung realisierte Anhängererkennungsschaltung eignet sich insbesondere auch für eine Anhängererkennung, wenn die Leuchte nicht aktiv, das heißt ausgeschaltet, ist.

Wie bereits vorher angedeutet, ist die elektrische Spannung nahezu null, wenn die Leuchte als Leuchtmittel eine Glühlampe aufweist. Bei einer Leuchtdiodenanordnung liegt ein Wert der elektrischen Spannung der Leitung zur Leuchte unterhalb eines Wertes der elektrischen Spannung, die zur Versorgung der Konstantstromquelle dient. Als Bezugspunkt für die Ermittlung einer elektrischen Spannung kann die Masse, insbesondere die Zugfahrzeugmasse dienen. Ist dagegen die Leitung zur Leuchte unterbrochen, ermittelt die Spannungsmessschaltung eine Spannung, die im Wesentlichen der elektrischen Spannung am ersten Anschluss der Konstantstromquelle entspricht. Die Spannungsmessschaltung kann somit ein Signal liefern, dessen Auswertung es ermöglicht, festzustellen, ob der Anhänger ordnungsgemäß an das Zugfahrzeug angekuppelt ist. Ein von der Spannungsmessschaltung hierfür geliefertes Signal ist vorzugsweise hinsichtlich eines Signalwertes proportional zur durch die Spannungsmessschaltung ermittelten elektrischen Spannung. Das Signal kann beispielweise einem Zugfahrzeugrechner oder dergleichen für eine weitere Auswertung bereitgestellt werden. Das Signal kann natürlich analog oder digital sein.

Liegt der durch die Spannungsmessschaltung ermittelte Wert der elektrischen Spannung in einem vorgegebenen Bereich, vorzugsweise in einem Bereich zwischen 0 Volt und einer vorgegebenen Teilspannung des ersten Anschlusses der Konstantstromquelle, entspricht dies einer ordnungsgemäßen Ankupplung des Anhängers an das Zugfahrzeug. Liegt dagegen die ermittelte Spannung im wesentlichen auf einem Wert, der der Spannung am ersten Anschluss der Konstantstromquelle entspricht, liegt keine ordnungsgemäße Ankupplung des Anhängers an das Zugfahrzeug vor und es kann eine Meldung an den Fahrer des Zugfahrzeugs erfolgen, beispielsweise indem eine Meldung im Cockpit ausgegeben wird.

Die Spannungsmessschaltung kann einen mit einem Anschluss an die Zugfahrzeugmasse angeschlossenen elektrischen Widerstand aufweisen. Der zweite Anschluss des elektrischen Widerstands ist vorzugsweise an die Leitung zur Leuchte angeschlossen. Durch ermitteln des Stromflusses durch den Widerstand kann die elektrische Spannung der Leitung zur Leuchte ermittelt werden, da zwischen dem Strom durch den elektrischen Widerstand und der an seinen Anschlüssen anliegenden elektrischen Spannung nach dem Ohmschen Gesetz ein linearer Zusammenhang besteht.

Darüber hinaus kann die Spannungsmessschaltung einen elektrischen Spannungsteiler und/oder eine Zehnerdiode aufweisen. Der elektrische Spannungsteiler ist mit einem seiner drei Anschlüsse an Masse und mit einem zweiten Anschluss an die Leitung zur Leuchte angeschlossen. Ein Mittelanschluss, auch Spannungsabgriff genannt, zwischen zwei den Spannungsteiler bildenden Widerständen stellt das Signal bereit, welches zur weiteren Auswertung dient. Die Spannung am Mittelanschluss ist proportional zur am gesamten Spannungsteiler anliegenden elektrischen Spannung.

Um die Spannungsmessung weiter verbessern zu können, kann der Spannungsteiler auch dahingehend ergänzt werden, dass anstelle oder parallel zum Widerstand zwischen dem Mittelanschluss und der Leitung zur Leuchte eine Zehnerdiode angeschlossen ist. Dadurch entsprechen Spannungsänderungen der Leitung zur Leuchte im Wesentlichen Spannungsänderungen am Mittelanschluss des Spannungsteilers, so dass die weitere Auswertung und Zuverlässigkeit verbessert werden kann.

Um den bestimmungsgemäßen Betrieb der Leuchte durch die Anhängererkennungseinrichtung nicht zu stören, können Entkopplungsmittel vorgesehen sein, mit denen es möglich ist, die Anhängererkennungseinrichtung von der Leuchte insbesondere beim Leuchtbetrieb der Leuchte zu entkoppeln. Eine einfache und kostengünstige Möglichkeit kann mittels einer Diode erreicht werden, die zwischen der Leitung zur Leuchte und dem mit der Spannungsmessschaltung verbundenen zweiten Anschluss der Konstantstromquelle geschaltet ist. Diese Entkopplung eignet sich darüber hinaus in dem Fall als Schutz, in dem die Konstantstromquelle mit einer Spannungsverpolung beaufschlagt werden könnte. Somit würde in diesem Fall das Entkopplungsmittel auch zum Schutz der Konstantstromquelle dienen. Anstelle einer Diode kann natürlich auch ein Transistor, ein Schaltkontakt, ein Thyristor oder dergleichen zum Einsatz kommen.

Eine weitere Ausgestaltung sieht vor, dass die Anhängererkennungseinrichtung Leuchtenerkennungsmittel aufweist, mittels denen die Art der Leuchte ermittelbar ist. Die Art der Leuchte ist vorliegend dadurch bestimmt, dass es sich um eine Leuchtdiodenanordnung, eine Glühfadenlampe oder dergleichen bei dem Leuchtmittel der Leuchte handelt. Anhand des von der Spannungsmessschaltung gelieferten Signals kann, wie bereits oben angedeutet, ermittelt werden, ob eine Leuchtdiodenanordnung oder eine Glühlampe als Leuchtmittel der Leuchte vorliegt. Bei einer Glühlampe kann das Signal, welches vorliegend durch eine proportionale Spannung zur Spannung auf der Leitung zur Leuchte gebildet ist, im Wesentlichen null Volt sein. Bei einer Leuchtdiodenanordnung kann diese Spannung deutlich von null Volt abweichen, und kann mehrere Volt betragen. Anhand des Wertes der Signalspannung kann somit festgestellt werden, welches Leuchtmittel in der Leuchte vorhanden ist. Diese Information kann für weitere Zwecke verwendet werden, beispielsweise zum Einstellen einer Leuchtenüberwachung oder dergleichen. Bekanntermaßen ist die Zuverlässigkeit der Leuchtenüberwachung davon abhängig, ob die Überwachung an das Leuchtmittel angepasst ist. So kann anhand der Auswertung des von der Spannungsmessschaltung gelieferten Signals die Leuchtenüberwachung entsprechend dem in der Leuchte vorhandenen Leuchtmittel angepasst werden. Vorteilhaft ist dies beispielsweise, wenn unterschiedliche Leuchtmittel gegeneinander ausgetauscht werden und eine Anpassung der Leuchtenüberwachung erfordern würden. Dies kann automatisiert werden.

Die Spannungsmessschaltung kann eine Rechnereinheit aufweisen. Mit der Rechnereinheit ist es möglich, das Signal der Spannungsmesseinheit aufzubereiten und eine Meldung auszugeben. Die Meldung kann beispielsweise an eine Zentrale, aber auch an einen Rechner des Zugfahrzeugs ausgegeben werden. Darüber hinaus besteht die Möglichkeit, die Meldung an den Fahrer des Zugfahrzeugs auszugeben beispielsweise durch eine Anzeige im Cockpit des Zugfahrzeugs. Darüber hinaus besteht mit der Rechnereinheit die Möglichkeit, zusätzliche Signalauswertungen vorzunehmen, beispielsweise einen Temperatureinfluss herauszurechnen, der sich aufgrund der Temperaturabhängigkeit der physikalischen Eigenschaften der Leuchtdiodenanordnung ergeben kann. Hierzu kann ein Temperatursensor ausgewertet werden.

Vorzugsweise ist ein Konstantstrom der Konstantstromquelle einstellbar. Die Einstellbarkeit kann dadurch erreicht werden, dass die Konstantstromquelle mittels Einstellmitteln hinsichtlich des Konstantstroms eingestellt wird. Dies kann beispielsweise durch einen Rechner des Zugfahrzeugs, durch manuelle Einstellung oder dergleichen erfolgen. Das Einstellmittel kann beispielsweise ein Einstellwiderstand der Konstantstromquelle oder dergleichen sein. Besonders vorteilhaft erweist es sich, wenn die Konstantstromquelle ein- und ausgeschaltet werden kann. So kann erreicht werden, dass die Konstantstromquelle nur dann aktiv ist, wenn auch eine entsprechende Messung mittels der Spannungsmessschaltung vorgenommen werden kann beziehungsweise soll. So kann vorgesehen sein, dass die Konstantstromquelle lediglich dann aktiv ist, wenn auch eine Zündung des Zugfahrzeugs eingeschaltet ist. Darüber hinaus kann vorgesehen sein, dass die Konstantstromquelle nur zu vorgebbaren Zeitpunkten eingeschaltet wird, zu denen eine Spannungsmessung durchgeführt werden soll. Darüber hinaus kann der Konstantstrom an das Leuchtmittel der Leuchte auf einfache Weise angepasst werden. So kann vorgesehen sein, dass der Konstantstrom entsprechend herabgeregelt wird, wenn die Leuchte in unerwünschter Weise gut erkennbar auf den Konstantstrom reagiert. Dadurch lässt sich eine einfache Anpassung der Erfindung erreichen, die es ermöglicht, die Erfindung auch nachträglich in einem Fahrzeug vorzusehen. Darüber hinaus kann erreicht werden, dass der Konstantstrom in Abhängigkeit von einer Umgebungs- und/oder Betriebstemperatur eingestellt wird. Dies hat den Vorteil, dass eine eventuelle Drift bei der Spannungsmessung kompensiert werden kann, indem der Konstantstrom entsprechend nachgeführt wird. Vorteilhaft erweist sich dies insbesondere bei Leuchtdiodenanordnungen, deren physikalische Durchlasseigenschaften teilweise erheblich temperaturabhängig sind.

Mit der Erfindung wird ferner ein Anhängeranschlussgerät vorgeschlagen, welches eine Anhängererkennungseinrichtung der Erfindung aufweist. Elektrische Anhängeranschlussgeräte dienen im Allgemeinen dazu, eine elektrische Anlage eines an einem Zugfahrzeug angekoppelte Anhängers oder Fahrradheckträgers, zum Beispiel eine Anhängerbeleuchtungsanlage, in durch das Zugfahrzeug vorgebbarer Weise zu steuern. Dabei kann die elektrische Anlage des Anhängers oder des Fahrradheckträgers eine Mehrzahl unterschiedlicher elektrischer Komponenten umfassen. Derartige elektrische Komponenten betreffen insbesondere die Anhängerbeleuchtungsanlage, das heißt, beispielsweise die Rückleuchten, die Bremsleuchten, die Nebelschlussleuchte und/oder dergleichen Leuchten. Andere elektrische Komponenten, insbesondere eines Anhängers können eine Klimaanlage, eine Heizung und/oder dergleichen elektrische Verbraucher sein, die gleichfalls mittels des elektrischen Anhängeranschlussgerätes in vorgebbarer Weise angesteuert werden können.

Elektrische Anhängeranschlussgeräte der gattungsgemäßen Art können herstellerseitig im Zugfahrzeug installiert sein. Eine Alternative ist die Nachrüstung, weshalb dann gattungsgemäße Anhängeranschlussgeräte auch als Bestandteil sogenannter Nachrüstsätze erhältlich sind. Derartige Nachrüstsätze beinhalten neben einem Anhängeranschlussgerät die aus einzelnen Kabelsträngen gebildete Verkabelung, die anwenderseitig zu installieren und insbesondere an das Zugfahrzeugseitige Bordnetz anzuschließen ist. Dabei verfügen die aus dem Stand der Technik vorbekannten Anhängeranschlussgeräte zumindest über eine Anschlusskontakteinheit, die der elektrischen Verbindung des Anhängeranschlussgerätes mit dem anhängerseitigen Bordnetz dient. In aller Regel ist die Anhängeranschlusskontakteinheit nach Art einer Steckdose ausgebildet, die im endfertig montierten Zustand einen hierzu korrespondierend ausgebildeten Stecker eines zum Anhänger reichenden Kabelstrangs aufnimmt.

Durch die Erfindung ist es möglich, mit dem Anhängeranschlussgerät zugleich auch automatisch eine Anhängererkennungseinrichtung bereitzustellen, ohne dass separate Geräte beziehungsweise Einrichtungen vorzusehen wären.

Insbesondere wird vorgeschlagen, dass die Konstantstromquelle mit einem die Leuchte schaltenden elektronischen Schalter des Anhängeranschlussgeräts einstückig ausgebildet ist. Hierdurch können insgesamt Bauelemente und Aufwand eingespart werden.

Mit der Erfindung wird ferner ein Zugfahrzeug mit einer Anhängererkennungseinrichtung der Erfindung vorgeschlagen. Hierdurch wird es möglich, dass auch Anhänger als angehängt erkannt werden können, bei denen eine oder mehrere Leuchten als Leuchtmittel eine Leuchtdiodenanordnung oder sogar gemischte Leuchtmittel aufweisen. Die Verwendung eines Mikroschalters zur Anhängererkennung kann dadurch vermieden werden.

Besonders vorteilhaft erweist es sich, wenn die Anhängererkennungseinrichtung in ein Anhängeranschlussgerät integriert ist. Dadurch können separate Einrichtungen und Geräte eingespart werden und die Funktionen anhängerbezogen in ein einziges Gerät konzentriert werden.

Weiterhin kann vorgesehen sein, dass das Zugfahrzeug ein Anhängeranschlussgerät der Erfindung aufweist. Dadurch können Steuer- sowie auch Energieversorgungsfunktionen bezüglich des Anhängers mit einer zuverlässigen Anhängererkennung, insbesondere unabhängig von der Art der Leuchtmittel in Leuchten des Anhängers in einer einzigen Einheit konzentriert werden. Dies ermöglicht es, auf einfache Weise ein Zugfahrzeug mit der Erfindung nachzurüsten, wobei zusätzlich herstellerseitig bereits eine umfangreiche Funktionsprüfung vorgesehen sein kann, sodass eine zuverlässige, einfache Nachrüstung erreicht werden kann.

Das Zugfahrzeug kann ferner einen vorzugsweise abnehmbaren Heckaufbau, insbesondere einen Fahrradheckträger aufweisen. Ein derartiger Heckaufbau ist beispielsweise an der Anhängerkupplung des Zugfahrzeugs aufgesetzt, insbesondere mit dieser verbunden und an ihr befestigt. Eine Anhängerbeleuchtungsanlage des Heckaufbaus ist über eine Anhängeranschlusskontakteinheit, die zum Beispiel eine Steckverbindung mit einer Steckdose und einem Stecker aufweist, mit dem Zugfahrzeug elektrisch verbunden. Dadurch lässt sich die Erfindung vorteilhaft bei Heckaufbauten einsetzen, und zwar unabhängig davon, ob der Heckaufbau eine Anhängerbeleuchtungsanlage mit Glühlampen oder Leuchtdiodenanordnungen aufweist. Darüber hinaus ist es bei der Erfindung möglich, die Anhängerbeleuchtungsanlage des Heckaufbaus nachträglich bezüglich der Leuchtmittel der Leuchten zu ändern, indem beispielsweise Glühlampen als Leuchtmittel durch Leuchtdiodenanordnungen als Leuchtmittel ersetzt werden. Die bestimmungsgemäße Funktion der Anhängererkennungseinrichtung der Erfindung kann in beiden Fällen aufrechterhalten werden.

Die Erfindung betrifft ferner ein Verfahren zur Anhängererkennung eines an einem Zugfahrzeug angekuppelten Anhängers mittels einer Anhängererkennungseinrichtung, wobei der Anhänger eine Anhängerbeleuchtungsanlage mit wenigstens einer Leuchte aufweist, welche Leuchte über eine Leitung gesteuert mit elektrischer Energie aus einem Bordnetz des Zugfahrzeugs versorgbar ist, wobei ein Konstantstrom in die Leitung eingespeist und die elektrische Spannung der Leitung gegenüber einem Bezugspotential des Bordnetzes ermittelt wird, wobei eine Konstantstromquelle elektronischer Art verwendet wird, die ihre elektrische Energie, aus der der Konstantstrom gewonnen und bereitgestellt wird, aus dem Bordnetz bezieht, so dass die Konstantstromquelle über einen vorgegebenen Spannungsbereich einen konstanten elektrischen Strom bereitstellt, welcher Spannungsbereich durch Bezugspotentiale begrenzt ist, an denen die Konstantstromquelle angeschlossen ist, wobei durch Auswerten der ermittelten elektrischen Spannung festgestellt wird, ob eine elektrische Verbindung zur Leuchte besteht und ob ein Anhänger bestimmungsgemäß an das Zugfahrzeug angeschlossen ist und wobei der Konstantstrom in die Leitung entkoppelt eingespeist wird, so dass die Anhängererkennungseinrichtung von der Leuchte, insbesondere beim Leuchtbetrieb der Leuchte entkoppelt wird, um den bestimmungsgemäßen Betrieb der Leuchte nicht zu stören.

Die gemessene elektrische Spannung ist bei geeigneter Wahl des Konstantstromes durch charakteristische Eigenschaften der Leuchte beziehungsweise des Leuchtmittels bestimmt. Durch Auswerten der ermittelten elektrischen Spannung kann festgestellt werden, ob eine elektrische Verbindung zur Leuchte besteht und, insbesondere wenn es sich um eine Leuchte des Anhängers handelt, ob ein Anhänger bestimmungsgemäß an das Zugfahrzeug angeschlossen ist. Dadurch ist es möglich, eine Anhängererkennung zu realisieren, die im Wesentlichen unabhängig von der Art des in der Leuchte verwendeten Leuchtmittels ist.

Darüber hinaus kann das Verfahren auch zur Bestimmung der Art des in der Leuchte eingesetzten Leuchtmittels genutzt werden. Anhand der ausgewerteten elektrischen Spannung lässt sich beispielsweise ermitteln, ob das Leuchtmittel durch eine Glühlampe, eine Leuchtdiodenanordnung Kombinationen hiervon und/oder dergleichen gebildet ist.

Das Auswerten der elektrischen Spannung kann mittels eines Rechners, einer elektronischen Hardwareschaltung und/oder dergleichen erfolgen.

Besonders vorteilhaft erweist es sich, wenn der Konstantstrom eingestellt und/oder geregelt wird. Das Einstellen umfasst nicht nur das Einstellen eines Stromwertes sondern auch ein Ein- und/oder Ausschalten des Konstantstromes beziehungsweise der Konstantstromquelle. Dadurch kann beispielsweise erreicht werden, dass der Konstantstrom nur dann in die Leuchte eingespeist wird, wenn sie nicht aktiviert ist. Dadurch können Wechselwirkungen, insbesondere zwischen einer Steuerung der Leuchte und der Funktion der Anhängererkennung vermieden werden. Mit einer Regelung können darüber hinaus Temperatureinflüsse, Toleranzen und/oder dergleichen reduziert werden, die die bestimmungsgemäße Funktion der Erfindung beeinträchtigen könnten.

Nach einer Weiterbildung kann der Konstantstrom in mehrere Leitungen, vorzugsweise zeitgleich, entkoppelt eingespeist werden. Dadurch kann die Erfindung von der Betriebsbereitschaft einer einzigen Leuchte unabhängig gemacht und Redundanz erreicht werden. Das Einspeisen kann im Wesentlichen zeitgleich, aber auch zeitversetzt nacheinander, beispielsweise im Zeitmultiplex oder dergleichen, erfolgen. Entkoppelt bedeutet, dass im Wesentlichen keine Rückwirkungen zwischen den einzelnen Leuchten und/oder Leitungen entstehen können. Eine Entkopplung kann durch Verwendung von Entkopplungsdioden, Halbleiterschalter, insbesondere Analogschalter realisiert sein.

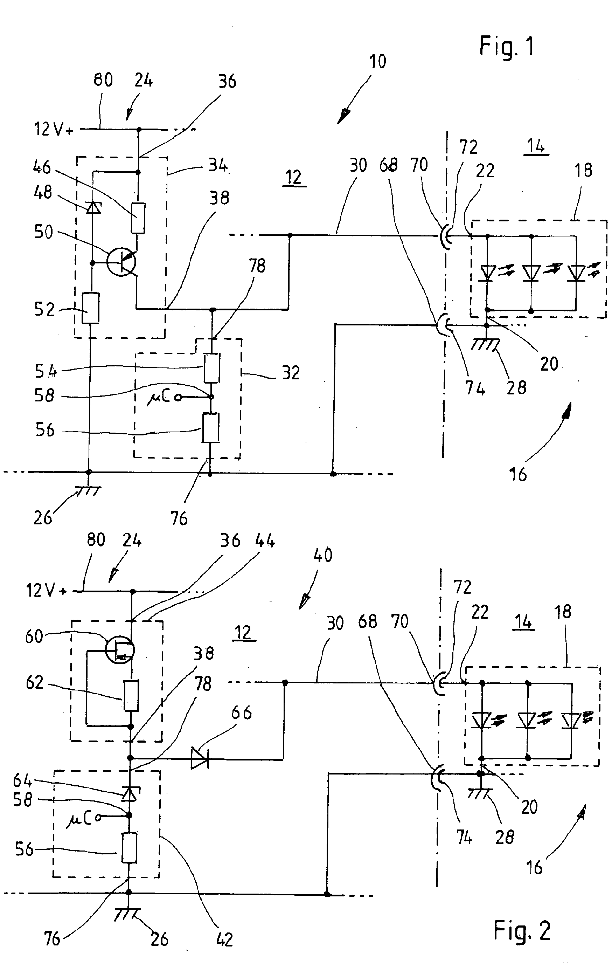

Weitere Vorteile und Merkmale sind der folgenden Beschreibung von Ausführungsbeispielen zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen lediglich der Erläuterung der folgenden Ausführungsbeispiele.

Es zeigen:
- Fig. 1: ein Prinzipschaltbild für eine erste Ausgestaltung der Erfindung und
- Fig. 2: ein Prinzipschaltbild für eine zweite Ausgestaltung der Erfindung.

In Fig. 1 ist ein Prinzipschaltbild für eine erste Ausgestaltung der Erfindung dargestellt. Das Schaltbild gemäß Fig. 1 zeigt ein Schaltbild für eine Anhängererkennungseinrichtung 10 gemäß der Erfindung für ein Zugfahrzeug 12 eines aus dem Zugfahrzeug 12 und einem Anhänger 14 gebildeten Fahrzeugzugs. Der Anhänger 14 weist eine Anhängerbeleuchtungsanlage 16 auf, die eine Reihe von Leuchten umfasst, von denen eine, nämlich die Leuchte 18, in Fig. 1 dargestellt ist.

Die Leuchte 18 stellt zwei Anschlüsse 20, 22 bereit. Mit einem ersten Anschluss 20 ist die Leuchte 18 an eine Anhängermasse 28 eines Bordnetzes 24 angeschlossen. Das Bordnetz 24 umfasst neben einer Zugfahrzeugmasse 26 auch die mit der Zugfahrzeugmasse 26 elektrisch in Verbindung stehende Anhängermasse 28. Nicht dargestellt ist in Fig. 1 ein Generator des Zugfahrzeugs 12 sowie ein mit dem Generator verbundener Akkumulator, die gemeinsam eine Energieversorgung des Bordnetzes 24 des Zugfahrzeugs 12 sowie der Anhängerbeleuchtungsanlage 16 bereitstellen. Die elektrische Energieversorgung hat zwei nicht dargestellte Anschlüsse, von denen ein erster, nämlich ein Minus-Pol, an die Zugfahrzeugmasse 26 angeschlossen ist. Ein zweiter der Anschlüsse, nämlich ein Plus-Pol, bildet ein zweites Bezugspotential des Bordnetzes 24, nämlich ein positives elektrisches Potential 80.

Mit einem zweiten Anschluss 22 ist die Leuchte 18 an eine Leitung 30 zur gesteuerten Versorgung der Leuchte 18 mit elektrischer Energie aus dem Bordnetz 24 des Zugfahrzeugs 12 angeschlossen. Im Zugfahrzeug 12 ist die Leitung 30 hierzu an einem nicht dargestellten Schalter angeschlossen, mit dem die Leitung 30 zugfahrzeugseitig mit dem positiven elektrischen Potential 80 der Energieversorgung des Bordnetzes 24 gesteuert verbindbar ist. Mit dem nicht dargestellten Schalter wird der Betrieb der Leuchte 18 in vorgebbarer Weise gesteuert.

Gemäß der Erfindung umfasst die Anhängererkennungseinrichtung 10 eine Spannungsmessschaltung 32 und eine Konstantstromquelle 34. Die Konstantstromquelle 34 weist zwei Anschlüsse 36, 38 auf, wobei ein erster Anschluss 36 der Konstantstromquelle 34 zum Bezug von elektrischer Energie an das Bordnetz 24 des Zugfahrzeugs 12 und ein zweiter Anschluss 38 der Konstantstromquelle 34 sowohl an die Leitung 30 zur Leuchte 18 als auch an die Spannungsmessschaltung 32 angeschlossen ist, und zwar an einem zweiten Anschluss 78 der Spannungsmessschaltung 32. Ein erster Anschluss 76 der Spannungsmessschaltung 32 ist an die Zugfahrzeugmasse 26 angeschlossen. Die Konstantstromquelle 34 stellt in diesem Ausführungsbeispiel einen im Wesentlichen konstanten Gleichstrom bereit.

Die Konstantstromquelle 34 umfasst einen bipolaren PNP-Transistor 50, dessen Kollektor den zweiten Anschluss 38 der Konstantstromquelle 34 bildet. Der Emitter des Transistors 50 ist über einen elektrischen Widerstand 46 mit dem ersten Anschluss 36 der Konstantstromquelle 34 verbunden. Zwischen der Basis des Transistors 50 und dem ersten Anschluss 36 der Konstantstromquelle 34 ist eine Zehnerdiode 48 geschaltet. Die Basis des Transistors 50 ist ferner über einen elektrischen Widerstand 52 an die Zugfahrzeugmasse 26 angeschlossen.

Das positive elektrische Potential 80 des Bordnetzes 24 gegenüber der Zugfahrzeugmasse 26 ist in diesem Ausführungsbeispiel eine Gleichspannung und beträgt vorliegend etwa 12 Volt, was der Betriebsspannung eines gewöhnlichen Blei-Säure-Akkumulators entspricht, wie er üblicherweise bei Kraftfahrzeugen zum Einsatz kommt. An dieses Potential 80 ist der erste Anschluss 36 der Konstantstromquelle 34 angeschlossen. Dadurch bilden die Zehnerdiode 48 und der elektrische Widerstand 52 einen nicht bezeichneten Spannungsteiler, der die Basis des Transistors 50 gegenüber seinem Emitter mit einer gegenüber dem positiven elektrischen Potential 80 negativen Spannung beaufschlagt. Aufgrund der physikalischen Eigenschaften der Zehnerdiode 48 ist die Spannungsbeaufschlagung der Basis des Transistors 50 im Wesentlichen konstant. Aufgrund der vorgespannten Basis des Transistors 50 fliest ein elektrischer Strom durch den elektrischen Widerstand 46 und die Kollektor-Emitter-Strecke des Transistors 50, der am zweiten Anschluss 38 der Konstantstromquelle 34 bereitgestellt wird. Aufgrund des Zusammenspiels der Bauteile der Konstantstromquelle 34 ist der am zweiten Anschluss 38 der Konstantstromquelle 34 bereitgestellte Strom im Wesentlichen konstant, und zwar im wesentlichen unabhängig von der am zweiten Anschluss 38 anliegenden elektrischen Spannung gegenüber der Zugfahrzeugmasse 26. Vorliegend wird davon ausgegangen, dass die Spannung am zweiten Anschluss 38 derart begrenzt ist, dass der Transistor 50 nicht beschädigt wird. In diesem Ausführungsbeispiel wird davon ausgegangen, dass das elektrische Potential des zweiten Anschlusses 38 zwischen den elektrischen Potentialen der Zugfahrzeugmasse 26 und dem positiven elektrischen Potential 80 liegt.

Der zweite Anschluss 38 der Konstantstromquelle 34 ist mit dem zweiten Anschluss 78 der Spannungsmessschaltung 32 verbunden. Ein erster Anschluss 76 der Spannungsmessschaltung 32 ist an die Zugfahrzeugmasse 26 angeschlossen. Die Spannungsmessschaltung 32 weist vorliegend einen aus elektrischen Widerständen 54 und 56 gebildeten Spannungsteiler auf, der mit seinen Anschlüssen an den ersten und den zweiten Anschluss 76, 78 der Spannungsmessschaltung 43 angeschlossen ist. Ein Spannungsabgriff 58 an der Verbindungsstelle der beiden elektrischen Widerstände 54, 56 ist an einen nicht weiter bezeichneten Mikrocontroller angeschlossen. Der Mikrocontroller misst das elektrische Potential des Spannungsabgriffs 58 gegenüber der Zugfahrzeugmasse 26. Überschreitet der Wert der am Spannungsabgriff 58 gegenüber der Zugfahrzeugmasse 26 gemessenen Spannung einen vorgegebenen Vergleichswert, erzeugt der Mikrocontroller eine Meldung, die im Cockpit des Zugfahrzeugs 12 für den Fahrer sichtbar angezeigt wird. Diese Meldung entspricht einem Fehlersignal, welches eine Störung bezüglich des angekuppelten Anhängers 14 signalisiert.

Die zweiten Anschlüsse 38, 78 sind an die Leitung 30 angeschlossen, über die die Leuchte 18 gesteuert mit elektrischer Energie versorgt wird. Die Leitung 30 ist auf eine Steckhülse 70 einer nicht bezeichneten Zugfahrzeugkupplung geführt, in die elektrisch kontaktierend ein Steckkontakt 72 eines nicht bezeichneten Anhängersteckers eingesteckt ist. Der Steckkontakt 72 ist über eine nicht bezeichnete Leitung mit dem zweiten Anschluss 22 der Leuchte 18 elektrisch verbunden.

Die Zugfahrzeugkupplung weist eine zweite Steckhülse 68 auf, die an die Zugfahrzeugmasse 26 angeschlossen ist. In die Kontakthülse 68 ist ein Steckkontakt 74 des Anhängersteckers eingesteckt, der über eine nicht bezeichnete Leitung an die Anhängermasse 28 angeschlossen ist. Auf diese Weise sind die Zugfahrzeugmasse 26 und die Anhängermasse 28 elektrisch leitend miteinander verbunden und haben das gleiche elektrische Potential.

Befindet sich die Leuchte 18 im eingeschalteten Zustand, das heißt, die Leitung 30 ist über den nicht dargestellten Schalter mit dem positiven elektrischen Potential 80 des Bordnetzes 24 verbunden, wird eine nicht bezeichnete Leuchtdiodenanordnung der Leuchte 18 mit einer elektrischen Spannung beaufschlagt, wodurch Licht erzeugt wird und von der Leuchte 18 in vorgebbarer Weise abgestrahlt wird. Die Leuchtdiodenanordnung ist somit das Leuchtmittel der Leuchte 18.

In diesem Betriebszustand befindet sich der Anschluss 38 der Konstantstromquelle 34 auf dem elektrisch positiven Potential 80, so dass die Stromquelle 34 deaktiviert ist. Sie liefert daher keinen Konstantstrom, sodass während der eingeschalteten Phase der Leuchte 18 eine Messung bezüglich einer Anhängererkennung nicht durchgeführt werden kann.

Ist nun die Leuchte 18 abgeschaltet, weil der nicht dargestellte Schalter die Leitung 30 vom elektrisch positiven Potential 80 getrennt hat, so wird über die Konstantstromquelle 34 ein Konstantstrom in die Parallelschaltung aus der Leuchte 18 und der Spannungsmessschaltung 32 eingespeist. Entsprechend der physikalischen Eigenschaften der Leuchtdiodenanordnung und der Auslegung der elektrischen Widerstände 54 und 56 stellt sich auf der Leitung 30 ein elektrisches Potential ein, welches zwischen dem positiven Potential 80 und der Zugfahrzeugmasse 26 liegt. Der durch die Konstantstromquelle 34 gelieferte Konstantstrom ist derart eingestellt, dass er im Wesentlichen keine sichtbare Leuchtwirkung bei der Leuchte 18 hervorruft. Hierdurch entsteht eine elektrische Spannung zwischen der Leitung 30 und der Zugfahrzeugmasse 26, die mittels der Spannungsmessschaltüng 32 ermittelt wird. Hierzu wird die Spannung mittels des Spannungsteilers geteilt und mittels des Spannungsabgriffs 58 auf den Mikrocontroller gegeben. Dieser ermittelt eine Spannung unterhalb des vorgegebenen Schwellwerts und signalisiert, dass der Anhänger 14 ordnungsgemäß an das Zugfahrzeug 12 angeschlossen ist.

Wird die Verbindung zwischen Zugfahrzeug 12 und dem Anhänger 14 unterbrochen, beispielsweise weil der Anhängerstecker nicht in die Zugfahrzeugkupplung eingesteckt oder herausgezogen ist, fließt der gesamte Strom der Konstantstromquelle 34 durch den aus den elektrischen Widerständen 54 und 56 gebildeten Spannungsteiler 32, was zu einer Spannungserhöhung am Spannungsabgriff 58 führt. Dies wird durch den Mikrocontroller detektiert, wobei ein Überschreiten des vorgebbaren Vergleichswertes festgestellt wird. Der Mikrocontroller erzeugt nun eine Meldung, die im Cockpit des Zugfahrzeugs 12 signalisiert wird. Die Meldung zeigt dem Fahrer an, dass eine Störung bezüglich des Ankuppelns des Anhängers 14 vorliegt.

Eine weitere Ausgestaltung der Erfindung zeigt Fig. 2. Dort ist ein schematisches Schaltbild ausschnittsweise dargestellt, welches im Wesentlichen auf der Ausgestaltung nach Fig. 1 aufbaut. Deswegen soll im Folgenden lediglich auf die Unterschiede bezüglich der Ausgestaltung nach Fig. 2 gegenüber Fig. 1 eingegangen werden. Im Übrigen wird bezüglich gleicher Funktionen und gleichem Aufbau auf die Beschreibung zur Fig. 1 verwiesen.

Die Ausgestaltung nach Fig. 2 unterscheidet sich von der Ausgestaltung nach Fig. 1 durch eine Stromquelle 44, die im Unterschied zur Stromquelle 34 nach Fig. 1 lediglich einen einzigen Transistor 60 sowie einen einzigen elektrischen Widerstand 62 aufweist. Der Transistor 60 ist vorliegend ein n-Kanal Sperrschicht Feldeffekttransistor. Der Drain-Anschluss des Transistors 60 bildet den ersten Anschluss 36 der Stromquelle 44. Der Source-Anschluss des Transistors 60 ist über den elektrischen Widerstand 62 an dem zweiten Anschluss 38 der Stromquelle 44 angeschlossen. An den zweiten Anschluss 38 ist ferner direkt der Gate-Anschluss des Transistors 60 angeschlossen. Dadurch wirkt diese Schaltung wie eine Konstantstromquelle, deren Strom durch Wahl des Widerstandswertes des elektrischen Widerstands 62 eingestellt werden kann, vergleichbar zur Einstellmöglichkeit des Konstantstromes durch Wahl des Widerstandswerts des elektrischen Widerstands 46 und/oder der Zehnerspannung der Zehnerdiode 48 bei der Stromquelle 34 des Ausführungsbeispiels zur Fig. 1.

Der zweite Anschluss 38 der Stromquelle 44 ist vorliegend mit dem zweiten Anschluss 78 einer Spannungsmessschaltung 42 verbunden. Die Spannungsmessschaltung 42 ist mit ihrem zweiten Anschluss 76 an die Zugfahrzeugmasse 26 angeschlossen. Die Spannungsmessschaltung 42 weist einen Spannungsteiler auf, der eine Zehnerdiode 64 sowie einen mit der Zehnerdiode 64 verbundenen elektrischen Widerstand 56 aufweist. Die Kathode der Zehnerdiode 64 bildet den zweiten Anschluss 78 der Spannungsmessschaltung 42. Der nicht mit der Zehnerdiode 64 verbundene Anschluss des elektrischen Widerstands 56 bildet den ersten Anschluss 76 der Spannungsmessschaltung 42. Am Verbindungspunkt der Anode der Zehnerdiode 64 mit dem elektrischen Widerstand 56 ist wie zuvor beim Ausführungsbeispiel gemäß Fig. 1 ein Spannungsabgriff 58 vorgesehen, der an einen nicht bezeichneten Mikrocontroller angeschlossen ist. Bezüglich der Funktion des Mikrocontrollers und der Auswertung der bezüglich der Zugfahrzeugmasse 26 gemessenen elektrischen Spannung wird auf die vorherigen Ausführungen zum Ausführungsbeispiel gemäß Fig. 1 verwiesen.

Die Ausgestaltung nach Fig. 2 unterscheidet sich ferner von der Ausgestaltung nach Fig. 1 dadurch, dass die zweiten Anschlüsse 38, 78 an die Anode einer Diode 66 als Entkopplungsmittel angeschlossen sind, deren Katode an die Leitung 30 angeschlossen ist. Dadurch wird die Funktion der Anhängererkennungseinrichtung 40 vom Betrieb der Leuchte 18 entkoppelt. Ein Rückwirken von der Leitung 30 in die Anhängererkennungseinrichtung 40 kann dadurch vermieden werden. Die Funktion entspricht im Wesentlichen der Funktion, wie sie bereits zum Ausführungsbeispiel gemäß Fig. 1 erläutert wurde. Im Unterschied hierzu ist lediglich anzumerken, dass bei Betrieb der Leuchte 18 im eingeschalteten Zustand die Diode 66 einen Rückstrom in die Anhängererkennungseinrichtung 40 verhindert. Erst wenn die Leuchte 18 im nicht betriebenen Zustand ist, das heißt, die Leitung 30 über einen geöffneten Schalter vom positiven elektrischen Potential 80 getrennt ist, wird mittels der Konstantstromquelle 44 ein Konstantstrom in eine Parallelschaltung aus der Spannungsmessschaltung 42 und der Serienschaltung der dann leitenden Diode 66 und der Leuchte 18 eingespeist. Dies führt zu den bereits zum vorhergehenden Ausführungsbeispiel beschriebenen Spannungseinstellungen. Diese Ausgestaltung eignet sich darüber hinaus dafür, mehrere Leuchten des Anhängers gemeinsam für die Anhängererkennung heranzuziehen. Dazu wird jede Leuchte über eine Diode wie die Diode 66 an die Konstantstromquelle 44 angeschlossen. Die Konstantstromquelle 44 ist entsprechend einzustellen, wie auch gegebenenfalls die Spannungsmessschaltung 42.

Die Spannungsmessschaltung 42 überträgt die auf der Leitung 30 gemessene elektrische Spannung gegenüber der Zugfahrzeugmasse 26 auf den Spannungsabgriff 58 im Wesentlichen mittels der Zehnerdiode 64 unverändert. Hierdurch wird ein größerer Signalhub am Spannungsabgriff 58 erreicht, wodurch die Messempfindlichkeit erhöht werden kann.

Nicht dargestellt in den Zeichnungen ist, dass die Stromquelle 34, 44 auch schaltbar ausgebildet sein kann. Bei der Stromquelle 34 kann dies auf einfache Weise dadurch erzeugt werden, dass in dem Anschluss des elektrischen Widerstands 52 an der Zugfahrzeugmasse 26 ein elektrischer Schalter zwischengeschaltet wird. Ist der Schalter geschlossen, liefert die Konstantstromquelle 34 bestimmungsgemäß ihren Konstantstrom. Ist der Schalter dagegen geöffnet, ist die Konstantstromquelle 34 abgeschaltet und liefert keinen Strom.

Natürlich können auch unterschiedlich Komponenten miteinander kombiniert werden, das heißt, Konstantstromquellen und Spannungsmessschaltungen in unterschiedlicher Weise miteinander kombiniert oder auch ausgetauscht werden. Das gilt natürlich insbesondere für die Konstantstromquellen 34, 44. Darüber hinaus kann bei der Ausgestaltung gemäß Fig. 1 natürlich auch eine Diode 66 vorgesehen werden, wie sie anhand des Ausführungsbeispiels gemäß Fig. 2 beschrieben ist. Dem Fachmann eröffnet sich somit eine Vielzahl von Kombinationsmöglichkeiten, um die Erfindung zu verwirklichen. Die beiden Ausführungsbeispiele dienen deshalb lediglich der Erläuterung der Erfindung und sind für diese nicht beschränkend.

Darüber hinaus kann die Erfindung auch in dualer Weise realisiert werden, wenn beispielsweise die Leuchte mit ihrem ersten Anschluss nicht an die Masse des Bordnetzes sondern an ein zweites Bezugspotential - zum Beispiel der Plus-Pol der elektrischen Energieversorgung - angeschlossen ist. In diesem Fall ist die Konstantstromquelle natürlich anstelle der Leuchte an die Masse des Bordnetzes oder ein vergleichbares Bezugspotential anzuschließen. Die Spannungsmessung kann nach wie vor gegen Masse erfolgen. Wesentlich ist lediglich eine Serienschaltung der Konstantstromquelle mit der Leuchte zwischen zwei Bezugspotentialen des Bordnetzes. Weiterhin dürfte für den Fachmann ersichtlich sein, dass, auch wenn die Ausführungsbeispiele eine Spannungsmessung gegenüber der Masse des Bordnetzes vorsehen, eine Spannungsmessung gegenüber einem beliebigen anderen Bezugspotential erfolgen kann, ohne die Funktion der Erfindung zu beeinträchtigen. Lediglich die Auswertung ist entsprechend anzupassen.

**Bezugszeichenliste**

| | | | |
|---|---|---|---|
| 10 | Anhängererkennungseinrichtung | 40 | Anhängererkennungseinrichtung |
| 12 | Zugfahrzeug | 42 | Spannungsmessschaltung |
| 14 | Anhänger | 44 | Konstantstromquelle |
| 16 | Anhängerbeleuchtungsanlage | 46 | Elektrischer Widerstand |
| 18 | Leuchte | 48 | Zenerdiode |
| 20 | Erster Anschluss | 50 | Bipolarer PNP-Transistor |
| 22 | Zweiter Anschluss | 52 | Elektrischer Widerstand |
| 24 | Bordnetz | 54 | Elektrischer Widerstand |
| 26 | Zugfahrzeugmasse | 56 | Elektrischer Widerstand |
| 28 | Anhängermasse | 58 | Spannungsabgriff |
| 30 | Leitung | 60 | n-Kanal Sperrschicht Feldeffekttransistor |
| 32 | Spannungsmessschaltung | 62 | Elektrischer Widerstand |
| 34 | Konstantstromquelle | 64 | Zenerdiode |
| 36 | Erster Anschluss | 66 | Diode |
| 38 | Zweiter Anschluss | 68 | Kontakthülse |
| 70 | Kontakthülse | | |
| 72 | Steckkontakt | | |
| 74 | Steckkontakt | | |
| 76 | Erster Anschluss | | |
| 78 | Zweiter Anschluss | | |
| 80 | Positives elektrisches Potential | | |

## Patentansprüche

1. Anhängererkennungseinrichtung (10, 40) zur Erkennung eines an ein Zugfahrzeug angekuppelten Anhängers (14), wobei der Anhänger eine Anhängerbeleuchtungsanlage (16) mit wenigstens einer Leuchte (18) aufweist, mit einer Spannungsmessschaltung (32, 42) und einer zwei Anschlüsse (36, 38) aufweisenden Konstantstromquelle (34, 44), wobei ein erster Anschluss (36) der Konstantstromquelle (34) zum Bezug von elektrischer Energie an das Bordnetz (24) des Zugfahrzeugs (12) und ein zweiter Anschluss (38) der Konstantstromquelle (34, 44) sowohl an eine Leitung (30) zur gesteuerten Versorgung einer Leuchte (18) des Anhängers (14) mit elektrischer Energie aus dem Bordnetz (24) des Zugfahrzeugs (12) als auch an die Spannungsmessschaltung (32, 42) angeschlossen ist, wobei die Konstantstromquelle (34, 44) elektronischer Art ist und ihre elektrische Energie, aus der der Konstantstrom gewonnen und bereitgestellt wird, aus dem Bordnetz (24) bezieht, so dass die Konstantstromquelle (34, 44) über einen vorgegebenen Spannungsbereich einen konstanten elektrischen Strom bereitstellt, welcher Spannungsbereich durch Bezugspotentiale begrenzt ist, an denen die Konstantstromquelle (34, 44) angeschlossen ist, wobei durch Auswerten der ermittelten elektrischen Spannung feststellbar ist, ob eine elektrische Verbindung zur Leuchte besteht und ob ein Anhänger bestimmungsgemäß an das Zugfahrzeug angeschlossen ist und wobei die Anhängererkennungseinrichtung Entkopplungsmittel (66) aufweist, die ein Entkoppeln der Anhängererkennungseinrichtung (10, 40) von der Leuchte (18), insbesondere beim Leuchtbetrieb der Leuchte (18) ermöglichen, um den bestimmungsgemäßen Betrieb der Leuchte nicht zu stören.

2. Anhängererkennungseinrichtung nach Anspruch 1, **dadurch gekennzeichnet, dass** die Spannungsmessschaltung (32, 42) einen mit einem Anschluss (76) an die Zugfahrzeugmasse (26) angeschlossenen elektrischen Widerstand (56) aufweist.

3. Anhängererkennungseinrichtung nach Anspruch 1 oder 2, **dadurch gekennzeichnet, dass** die Spannungsmessschaltung (32, 42) einen elektrischen Spannungsteiler (54, 56) und/oder eine Zenerdiode (64) aufweist.

4. Anhängererkennungseinrichtung nach einem der Ansprüche 1 bis 3, **gekennzeichnet durch** Leuchtenerkennungsmittel, mittels denen die Art der Leuchte (18) ermittelbar ist.

5. Anhängererkennungseinrichtung nach einem der Ansprüche 1 bis 4, **dadurch gekennzeichnet, dass** die Spannungsmessschaltung (32, 42) eine Rechnereinheit (µC) aufweist.

6. Anhängererkennungseinrichtung nach einem der Ansprüche 1 bis 5, **dadurch gekennzeichnet, dass** ein Konstantstrom der Konstantstromquelle (34, 44) einstellbar ist.

7. Anhängeranschlussgerät mit einer Anhängererkennungseinrichtung (10, 40) nach einem der vorhergehenden Ansprüche.

8. Anhängeranschlussgerät nach Anspruch 7, **dadurch gekennzeichnet, dass** die Konstantstromquelle (34, 44) mit einem die Leuchte (18) schaltenden elektronischen Schalter des Anhängeranschlussgeräts einstückig ausgebildet ist.

9. Zugfahrzeug mit einer Anhängererkennungseinrichtung nach einem der Ansprüche 1 bis 6.

10. Zugfahrzeug nach Anspruch 9, **dadurch gekennzeichnet, dass** die Anhängererkennungseinrichtung (10, 40) in ein Anhängeranschlussgerät integriert ist.

11. Zugfahrzeug nach Anspruch 9 oder 10, **dadurch gekennzeichnet, dass** das Anhängeranschlussgerät eines nach den Ansprüchen 8 und 9 ist.

12. Verfahren zur Anhängererkennung eines an einem Zugfahrzeug (12) angekuppelten Anhängers (14) mittels einer Anhängererkennungseinrichtung (10, 40), wobei der Anhänger (14) eine Anhängerbeleuchtungsanlage (16) mit wenigstens einer Leuchte (18) aufweist, welche Leuchte (18) über eine Leitung (30) gesteuert mit elektrischer Energie aus einem Bordnetz (24) des Zugfahrzeugs (12) versorgbar ist, wobei ein Konstantstrom in die Leitung (30) eingespeist und die elektrische Spannung der Leitung (30) gegenüber einem Bezugspotential (26, 80) des Bordnetzes (24) ermittelt wird, wobei eine Konstantstromquelle (34, 44) elektronischer Art verwendet wird, die ihre elektrische Energie, aus der der Konstantstrom gewonnen und bereitgestellt wird, aus dem Bordnetz (24) bezieht, so dass die Konstantstromquelle (34, 44) über einen vorgegebenen Spannungsbereich einen konstanten elektrischen Strom bereitstellt, welcher Spannungsbereich durch Bezugspotentiale begrenzt ist, an denen die Konstantstromquelle (34, 44) angeschlossen ist, wobei durch Auswerten der ermittelten elektrischen Spannung festgestellt wird, ob eine elektrische Verbindung zur Leuchte besteht und ob ein Anhänger bestimmungsgemäß an das Zugfahrzeug angeschlossen ist und wobei der Konstantstrom in die Leitung (30) entkoppelt eingespeist wird, so dass die Anhängererkennungseinrichtung (10, 40) von der Leuchte (18), insbesondere beim Leuchtbetrieb der Leuchte (18) entkoppelt wird, um den bestimmungsgemäßen Betrieb der Leuchte nicht zu stören.

13. Verfahren nach Anspruch 12, **dadurch gekennzeichnet, dass** der Konstantstrom eingestellt und/ oder geregelt wird.

14. Verfahren nach Anspruch 12 oder 13, **dadurch gekennzeichnet, dass** der Konstantstrom in mehrere Leitungen (30) zeitgleich, entkoppelt eingespeist wird.

## Claims

1. A trailer detection device (10, 40) for detecting a trailer (14) coupled to a towing vehicle, wherein the trailer comprises a trailer lighting system (16) with at least one light (18), comprising a voltage measurement circuit (32, 42) and a constant current source (34, 44) which comprises two connections (36, 38), wherein a first connection (36) of the constant current source (34) is connected to the on-board power system (24) of the towing vehicle (12) for obtaining electric energy and a second connection (38) of the constant current source (34, 44) is connected to both a line (30) for the controlled supply of a light (18) of the trailer (14) with electric energy from the on-board power system (24) of the towing vehicle (12) and to the voltage measurement circuit (32, 42), wherein the constant current source (34, 44) is of the electronic type and obtains its electric energy, from which the constant current is gained and provided, from the on-board power system (24), such that the constant current source (34, 44) provides a constant electric current over a pre-determinable voltage range, which voltage range is limited by reference potentials to which the constant current source (34, 44) is connected, wherein it can be determined by evaluating the detected electric voltage, whether an electric connection to the light is established and whether a trailer is properly coupled to the towing vehicle and wherein the trailer detection device comprises decoupling means (66) which enable to decouple the trailer detection device (10, 40) from the light (18), in particular during the lighting operation of the light (18), in order to not disturb the proper operation of the light.

2. A trailer detection device according to claim 1, **characterized in that** the voltage measurement circuit (32, 42) comprises an electric resistor (56), one connection (76) of which is connected to the towing vehicle mass (26).

3. A trailer detection device according to claim 1 or 2, **characterized in that** the voltage measurement circuit (32, 42) comprises an electric voltage divider (54, 56) and/or a Zener diode (64).

4. A trailer detection device according to one of the claims 1 through 3, **characterized by** light detection means, by means of which the type of the light (18) can be determined.

5. A trailer detection device according to one of the claims 1 through 4, **characterized in that** the voltage measurement circuit (32, 42) comprises a computer unit (µC).

6. A trailer detection device according to one of the claims 1 through 5, **characterized in that** a constant current from the constant current source (34, 44) can be set.

7. A trailer connection device comprising a trailer detection device (10, 40) according to one of the preceding claims.

8. A trailer connection device according to claim 7, **characterized in that** the constant current source (34, 44) is integrally formed with an electronic switch of the trailer connection device, which switch switches the light (18).

9. A towing vehicle comprising a trailer detection device according to one of the claims 1 through 6.

10. A towing vehicle according to claim 9, **characterized in that** the trailer detection device (10, 40) is integrated in a trailer connection device.

11. A towing vehicle according to claim 9 or 10, **characterized in that** the trailer connection device is one according to the claims 7 and 8.

12. A method for the trailer detection of a trailer (14) which is coupled to a towing vehicle (12) by means of a trailer detection device (10, 40), wherein the trailer (14) comprises a trailer lighting system (16) with at least one light (18), which light (18) can be supplied in a controlled manner with energy from an on-board power system (24) of the towing vehicle (12) via a line (30), wherein a constant current is fed into the line (30) and the electric voltage of the line (30) with respect to a reference potential (26, 80) of the on-board power system (24) is determined, wherein a constant current source (34, 44) of the electronic type is used, which obtains its electric energy, from which the constant current is gained and provided, from the on-board power system (24), such that the constant current source (34, 44) provides a constant electric current over a pre-determinable voltage range, which voltage range is limited by reference potentials to which the constant current source (34, 44) is connected, wherein it is determined by evaluating the detected electric voltage, whether an electric connection to the light is established and whether a trailer is properly coupled to the towing vehicle and wherein the constant current is fed into the line (30) in a decoupled manner, such that the trailer detection device (10, 40) is decoupled from the light (18), in particular during the lighting operation of the light (18), in order to not disturb the proper operation of the light.

13. A method according to claim 12, **characterized in that** the constant current is set and/or controlled.

14. A method according to claim 12 or 13, **characterized in that** the constant current is simultaneously fed into several lines (30) in a decoupled manner.

## Revendications

1. Dispositif de détection de remorque (10, 40) pour détecter une remorque (14) accouplée à un véhicule de traction, dans lequel la remorque comprend un système d'éclairage de remorque (16) comprenant au moins une lampe (18), comprenant un circuit de mesure de tension (32, 42) et une source de courant constant (34, 44), qui comprend deux bornes (36, 38), une première borne (36) de la source de courant constant (34) étant raccordée au réseau de bord (24) du véhicule de traction (12) pour obtenir de l'énergie électrique et une deuxième borne (38) de la source de courant constant (34, 44) étant raccordée à une ligne (30) pour alimenter de manière contrôlée une lampe (18) de la remorque (14) en énergie électrique à partir du réseau de bord (24) du véhicule de traction (12) et au circuit de mesure de tension (32, 42), la source de courant constant (34, 44) étant du type électronique et obtenant son énergie électrique, à partir de laquelle le courant constant est produit et fourni, du réseau de bord (24), de sorte que la source de courant constant (34, 44) fournit un courant électrique constant sur une plage de tension prédéterminée, laquelle plage de tension est limitée par des potentiels de référence auxquels est raccordée la source de courant constant (34, 44), l'évaluation de la tension électrique détectée permettant de déterminer si une liaison électrique à la lampe est établie et si une remorque est dûment accouplée au véhicule de traction, et le dispositif de détection de remorque comprenant des moyens de découplage (66), qui permettent de découpler le dispositif de détection de remorque (10, 40) de la lampe (18), notamment pendant l'opération d'éclairage de la lampe (18) pour ne pas perturber le bon fonctionnement de la lampe.

2. Dispositif de détection de remorque selon la revendication 1, **caractérisé en ce que** le circuit de mesure de tension (32, 42) comprend une résistance électrique (56), dont une borne (76) est raccordée à la masse du véhicule de traction (26).

3. Dispositif de détection de remorque selon la revendication 1 ou la revendication 2, **caractérisé en ce que** le circuit de mesure de tension (32, 42) comprend un diviseur de tension électrique (54, 56) et/ou une diode Zener (64).

4. Dispositif de détection de remorque selon l'une des revendications 1 à 3, **caractérisé par** des moyens de détection de lampes, par moyen desquels le type de la lampe (18) peut être déterminé.

5. Dispositif de détection de remorque selon l'une des revendications 1 à 4, **caractérisé en ce que** le circuit de mesure de tension (32, 42) comprend un ordinateur (µC).

6. Dispositif de détection de remorque selon l'une des revendications 1 à 5, **caractérisé en ce qu'**un courant constant de la source de courant constant (34, 44) peut être réglé.

7. Appareil de raccordement de remorque comprenant un dispositif de détection de remorque (10, 40) selon l'une des revendications précédentes.

8. Appareil de raccordement de remorque selon la revendication 7, **caractérisé en ce que** la source de courant constant (34, 44) est formée d'un seul tenant avec un interrupteur électronique de l'appareil de raccordement de remorque, lequel interrupteur commute la lampe (18).

9. Véhicule de traction comprenant un dispositif de détection de remorque selon l'une des revendications 1 à 6.

10. Véhicule de traction selon la revendication 9, **caractérisé en ce que** le dispositif de détection de remorque (10, 40) est intégré dans un appareil de raccordement de remorque.

11. Véhicule de traction selon la revendication 9 ou la revendication 10, **caractérisé en ce que** l'appareil de raccordement de remorque est l'un selon les revendications 8 et 9.

12. Procédé de détection de remorque d'une remorque (14) accouplée à un véhicule de traction (12) par moyen d'un dispositif de détection de remorque (10, 40), dans lequel la remorque (14) comprend un système d'éclairage de remorque (16) comprenant au moins une lampe (18), laquelle lampe (18) peut être alimentée de manière contrôlée en énergie du réseau de bord (24) du véhicule de traction (12) via une ligne (30), un courant constant étant livré à la ligne (30) et la tension électrique de la ligne étant déterminé par rapport à un potentiel de référence (26, 80) du réseau de bord (24), une source de courant constant (34, 44) du type électronique étant utilisée, qui obtient son énergie électrique, à partir de laquelle le courant constant est produit et fourni, du réseau de bord (24), de sorte que la source de courant constant (34, 44) fournit un courant électrique constant sur une plage de tension prédéterminée, laquelle plage de tension est limitée par des potentiels de référence auxquels est raccordée la source de courant constant (34, 44), l'évaluation de la tension électrique détectée permettant de déterminer si une liaison électrique à la lampe est établie et si une remorque est dûment accouplée au véhicule de traction, et le courant constant étant livré à la ligne (30) de manière découplée, de sorte que le dispositif de détection de remorque (10, 40) est découplé de la lampe (18), notamment pendant l'opération d'éclairage de la lampe (18) pour ne pas perturber le bon fonctionnement de la lampe.

13. Procédé selon la revendication 12, **caractérisé en ce que** le courant constant est ajusté et/ou réglé.

14. Procédé selon la revendication 12 ou 13, **caractérisé en ce que** le courant constant est livré simultanément à plusieurs lignes (30) de manière découplée.
